# EUROPEAN PATENT SPECIFICATION

(11) **EP 4 108 554 B1**
(45) Date of publication and mention of the grant of the patent: **22.11.2023**
(21) Application number: 22179869.7
(22) Date of filing: 20.06.2022
(51) Int. Cl.: B62D 25/14, B62D 21/15, B62D 33/06, B60R 19/34, B60R 19/56

(54) **A CAB-OVER ENGINE TRUCK**
FRONTLENKER-LKW
CAMION À CABINE AVANCÉE

(30) Priority: 21.06.2021 NL 2028495
(43) Date of publication of application: 28.12.2022
(73) Proprietor: DAF Trucks N.V., 5643 TW Eindhoven (NL)
(72) Inventor: PIERIK, Gerardus Lambertus Hendrikus, 5643 TW Eindhoven (NL); SCHELLEKENS, Josephus Cornelis Maria, 5643 TW Eindhoven (NL); NIESTEN, Martijn Johan, 5643 TW Eindhoven (NL)
(74) Representative: V.O.

(56) References cited:
- EP-A1- 0 755 849
- WO-A1-2017/109752
- JP-A- 2005 067 268

## Description

The invention relates to a cab-over engine truck having a longitudinal direction, as seen in a normal forward direction of movement of the cab-over engine truck, the cab-over engine truck comprising:
a front side comprising a front grille;
a chassis comprising two parallel frame beams extending in the longitudinal direction;
an engine compartment;
and a driver cabin at least partially positioned over the engine compartment;
the driver cabin comprising:
   a dashboard;
   a driver side A-pillar and a co-driver side A-pillar; and
   a front windscreen frame in which a front windscreen is mounted, the front windscreen frame having a lower front windscreen frame part. The invention in particular relates to providing a cab-over engine with a deformation or crumple zone, so that in the event of a frontal crash impact the driver cabin and in particular the so called driver cell thereof the deformation zone can absorb the energy of the frontal crash impact and prevent intrusion of truck components into the driver cell. Providing a deformation zone in a cab-over engine truck in particular is a technical challenge since cab-over engine trucks lack a substantial frontal structure (such as the front bay of passenger cars) in front of the driver cell.

Such a cab-over engine truck is for example known from EP0755849A1. In this known cab-over engine truck the driver cabin has a front wall having a railing above which the front windscreen is arranged. The front wall has a driver side A-pillar and a co-driver side A-pillar and a dashboard supporting frame extending in the area of the front wall parapet line below the front windscreen between the two A-pillars and is connected to the two A-pillars and the front wall. The dashboard supporting frame comprises a front cross member not extending fully up to the two A-pillars, a dimensionally stable rear cross member connecting the A-pillars and several struts connecting the front and the rear cross member. The front and rear cross members and the struts are arranged in a plane parallel to a road surface on which the cab-over engine truck is supported. The struts are configured such that in the event of the cab-over engine truck suffers a frontal crash an effective deformation zone is provided within the dashboard supporting frame. Although in the cab-over engine truck known from EP0755849A1 an effective deformation zone is formed in the event of the cab-over engine truck suffering a frontal crash this deformation zone is positioned behind the A-pillars and thus the deformation zone is at least partly positioned in the part of the driver cabin forming the driver cell, which could impair the safety of the driver and the co-driver in the event of a frontal crash. Moreover, document WO 2017/109752 A1 discloses a cab-over engine truck according to the preamble of claim 1.

It is thus an object of the invention to provide a cab-over engine truck in which in the event of the cab-over engine truck suffering a frontal crash the driver cell is at least substantially not deformed.

According to the invention the object is obtained by providing a cab-over engine truck having a longitudinal direction, as seen in a normal forward direction of movement of the cab-over engine truck, the cab-over engine truck comprising:
a front side comprising a front grille;
a chassis comprising two parallel frame beams extending in the longitudinal direction;
an engine compartment;
and a driver cabin at least partially positioned over the engine compartment;
the driver cabin comprising:
   a dashboard;
   a driver side A-pillar and a co-driver side A-pillar; and
   a front windscreen frame in which a front windscreen is mounted, the front windscreen frame having a lower front windscreen frame part;
characterized in that
the driver cabin comprises a firewall positioned in vertical direction below the front windscreen,
in that the front grille is positioned at a distance between 150 mm and 250 mm in front of the firewall as seen in the normal forward direction of movement of the cab-over engine truck;
in that the firewall extends between and is connected to a lower part of the driver side A-pillar and to a lower part of the co-driver side A-pillar;
in that a front end of the lower front windscreen frame part is positioned in front of the firewall as seen in the normal forward direction of movement of the cab-over engine truck; and
in that the cab-over engine truck comprises crash boxes arranged in front of the two parallel frame beams of the chassis, the firewall being positioned between the crash boxes and the two parallel frame beams of the chassis. In this manner the crash boxes placed in front of the firewall in line with the parallel frame beams manage the energy absorption in the event of a frontal crash impact and the front grille acts as a bumper beam as it transmits the incoming loads of the frontal crash impact towards the crash boxes. Thus even in cab-over engine trucks having a dimensionally restricted front structure a deformation zone is formed which can absorb the energy of the frontal crash impact and prevent intrusion of truck components into the driver cell since the crash boxes interact with the front grille. In addition, since the lower front windscreen frame part is positioned in front of the firewall deformation of this lower front windscreen frame part until it reaches the firewall already absorbs an amount of the energy of the frontal crash impact enabling the cab-over engine truck to decelerate before the firewall is affected by the crash, thereby improving driver safety.

In an embodiment of a cab-over engine truck according to the invention in which the front end of the lower front windscreen frame part is positioned at a distance between 50 mm and 100 mm in front of the firewall in most cases of frontal crash impacts a sufficient amount of the energy of the frontal crash impact is absorbed thereby enabling the cab-over engine truck to decelerate sufficiently before the firewall is affected by the crash. In particular, when the lower front windscreen frame part is configured for deforming or collapsing a lower portion of the front windscreen under a high load as a result of a frontal crash impact without the driver side A-pillar and the co-driver side A-pillar deforming deceleration of the cab-over engine truck as a result of deformation of the lower front windscreen frame part can be made optimal.

In another embodiment of a cab-over engine truck according to the invention a front end of the crash boxes is positioned at a distance between 90 mm and 150 mm in front of the firewall. This distance between the front end of the crash boxes and the firewall enables the cab-over engine truck to decelerate in an event of a frontal crash before the firewall is affected by the crash, resulting in energy absorption prior to driver cell deformation.

In a further embodiment of a cab-over engine truck according to the invention the front grille is mounted on the lower front windscreen frame part by means of hinges, the hinges being configured for collapsing in an event of a frontal crash impact. In this manner the effective length of the deformation or crumple zone is increased since the hinges are configured to collapse instead of punching into the lower front windscreen frame part.

In a still further embodiment of a cab-over engine truck according to the invention the driver side A-pillar and the co-driver side A-pillar are further connected by a dashboard supporting frame, the dashboard supporting frame being configured to withstand tensional forces acting between the driver side A-pillar and the co-driver side A-pillar in an event of a frontal crash impact. In this manner in an event of a frontal crash impact deformation of the driver cell is strongly reduced. In particular, when the dashboard is a modular dashboard and comprises a front dashboard portion arranged in front of the driver side A-pillar and the co-driver side A-pillar as seen in the normal forward direction of movement of the cab-over engine truck, the front dashboard portion being deformable in an event of a frontal crash impact, the front dashboard portion absorbs an amount of energy of the frontal crash impact and thus reduces the amount of energy of the frontal crash impact acting on the remainder of the dashboard, thereby improving driver safety. This beneficial effect is improved in case the front dashboard portion is connected to the dashboard supporting frame by connecting means which are configured to collapse or fail in an event of a frontal crash impact.

The invention will be further explained with reference to the Figures, in which a non-limiting exemplary embodiment of a vehicle according to the invention is shown:
Fig. 1 schematically in perspective shows an embodiment of a cab-over engine truck according to the invention;
Fig. 2 schematically in side view shows a driver cabin of the cab-over engine truck of Figure 1; and
Fig. 3 schematically shows in an enlarged view the section III of Figure 2.

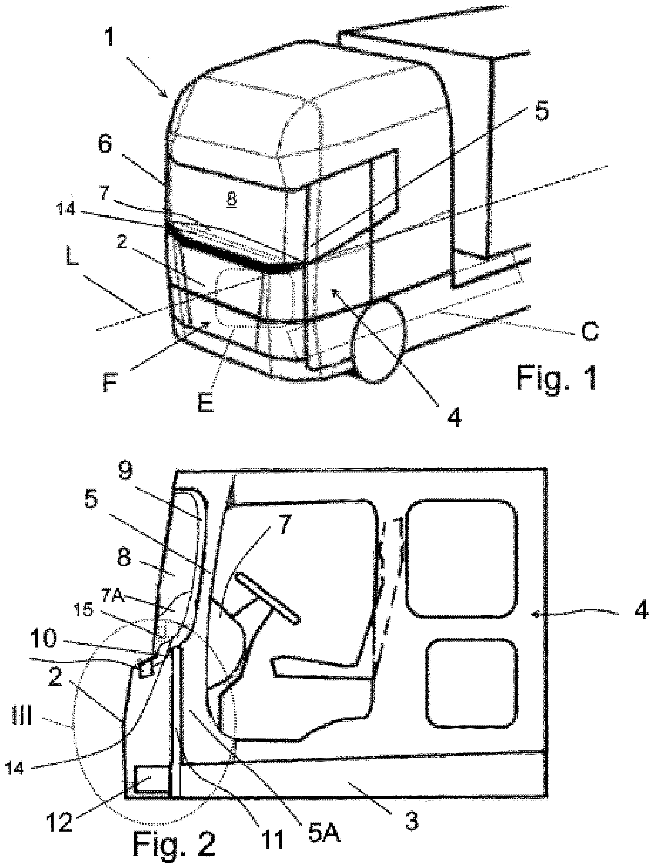

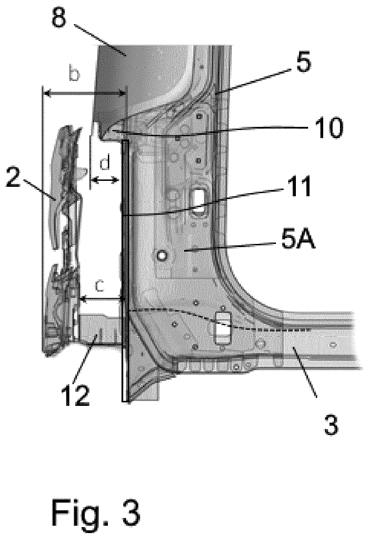

In Fig. 1 an example of an embodiment of a cab-over engine truck 1 according to the invention is schematically shown in sideview. The cab-over engine truck 1 has a longitudinal direction, as seen in a normal forward direction of movement of the cab-over engine truck 1. The cab-over engine truck 1 has a front side F comprising a front grille 2, a chassis C comprising two parallel frame beams 3 (Figs. 2 and 3), one on each side of the cab-over engine truck 1. The two parallel frame beams 3 extend in the longitudinal direction L of the cab-over engine truck 1. An engine compartment E is provided in the cab-over engine truck 1 and a driver cabin 4 is at least partially positioned over the engine compartment E. The driver cabin 4 further comprises a driver side A-pillar 5 and a co-driver side A-pillar 6.

As indicated in Figures 1 and 2 in the driver cabin 4 a dashboard 7 is provided and at the front side the driver cabin 4 is closed off by a front windscreen 8 which is mounted in a front windscreen frame 9. The front windscreen frame 9 has a lower front windscreen frame part 10.

A firewall 11 is positioned in vertical direction below the front windscreen 8 and extends between and is connected to a lower part 5A of the driver side A-pillar 5 and to a lower part of the co-driver side A-pillar 6.

The front end of the lower front windscreen frame part 10 is positioned in front of the firewall 11, as seen in the normal forward direction of movement of the cab-over engine truck 1. The distance d (Fig. 3) between the front end of the lower front windscreen frame part 10 and the firewall 11 preferably has a value between 50 mm and 100 mm.

Crash boxes 12 are arranged in front of the two parallel frame beams 3 of the chassis C, such that the firewall 11 is positioned between the crash boxes 12 and the two parallel frame beams 3 as indicated in Figures 2 and 3. In the embodiment shown in Figure 3 the distance c between a front end of the crash boxes 12 and the firewall 11 has a value between 90 mm and 150 mm. As indicated in Figure 3, the front grille 2 (i.e. the front end thereof) is positioned at a distance b, having a value between 150 mm and 250 mm in front of the firewall 11 as seen in the normal forward direction of movement of the cab-over engine truck 1. Despite this relatively dimensionally restricted front structure in front of the firewall 11 according to the invention an effective deformation zone is formed which can absorb the energy of the frontal crash impact and prevent intrusion of truck components into the driver cell. In particular the crash boxes 12 interact with the front grille 2 and the parallel frame beams 3 so that in the event of a frontal crash impact the front grille 2 acts as a bumper beam as it transmits the incoming loads of the frontal crash impact towards the crash boxes 12. The distance c between the front end of the crash boxes 12 and the firewall 11 enables the cab-over engine truck 1 to decelerate in an event of a frontal crash before the firewall 11 is affected by the crash, resulting in energy absorption prior to driver cell deformation.

In addition, since the lower front windscreen frame part 10 is positioned a distance d in front of the firewall 11 deformation of this lower front windscreen frame part 10 until it reaches the firewall 11 absorbs a certain amount of the energy of the frontal crash impact. This enables the cab-over engine truck 1 to decelerate before the firewall 11 is affected by the crash, thereby improving driver safety. In the embodiments shown the lower front windscreen frame part 10 is configured for deforming or collapsing a lower portion of the front windscreen 8 under a high load as a result of a frontal crash impact without the driver side A-pillar 5 and the co-driver side A-pillar 6 deforming. The lower front windscreen frame part 10 can e.g. be constructed as a relatively flexible part or can be provided with break lines which break under influence of a high load.

As mentioned above, the front grille 2 acts as a bumper beam as it transmits the incoming loads of the frontal crash impact towards the crash boxes 12. In order to make the deformation zone in front of the A-pillars 5, 6 even more effective the front grille 2 is mounted on the lower front windscreen frame part 10 by means of hinges 13 as indicated in Figure 2. The hinges 13 are configured for collapsing in an event of a frontal crash impact, thereby preventing that parts of the front grille 2 enter the driver cell.

As schematically indicated in Figures 1 and 2 the driver side A-pillar 5 and the co-driver side A-pillar 6 are further connected by a dashboard supporting frame 14. To aid in driver safety the dashboard supporting frame 14 is configured to withstand tensional forces acting between the driver side A-pillar 5 and the co-driver side A-pillar 6 in an event of a frontal crash impact. In the shown embodiments the dashboard 7 is a modular dashboard and comprises a front dashboard portion 7A which is arranged in front of the driver side A-pillar 5 and the co-driver side A-pillar 6 as seen in the normal forward direction of movement of the cab-over engine truck 1. The front dashboard portion 7A is configured for being deformed in an event of a frontal crash impact so that it absorbs an amount of energy of the frontal crash impact, in particular the front dashboard portion 7A is connected to the dashboard supporting frame 14 by connecting means 15 which are configured to collapse or fail in an event of a frontal crash impact. In this manner a deformation zone for a cab-over engine truck is provided which is substantially positioned in front of the A-pillars, as a result of which in an event of a frontal crash impact the driver cell situated behind the A-pillars is deformed to a lesser extent than in the prior art formed by EP0755849A1.

## Claims

1. A cab-over engine truck (1) having a longitudinal direction (L), as seen in a normal forward direction of movement of the cab-over engine truck (1), the cab-over engine truck (1) comprising:
a front side (F) comprising a front grille (2);
a chassis (C) comprising two parallel frame beams (3) extending in the longitudinal direction (L);
an engine compartment (E);
and a driver cabin (4) at least partially positioned over the engine compartment (E);
the driver cabin (4) comprising:
a dashboard (7);
a driver side A-pillar (5) and a co-driver side A-pillar (6);
a front windscreen frame (9) in which a front windscreen (8) is mounted, the front windscreen frame (9) having a lower front windscreen frame part (10);
a firewall (11) positioned in vertical direction below the front windscreen (8), the firewall (11) extending between and is connected to a lower part (5A) of the driver side A-pillar (5) and to a lower part of the co-driver side A-pillar (6); wherein a front end of the lower front windscreen frame part (10) is positioned in front of the firewall (11) as seen in the normal forward direction of movement of the cab-over engine truck (1);
**characterized in that** the front grille (2) is positioned at a distance between 150 mm and 250 mm in front of the firewall (11) as seen in the normal forward direction of movement of the cab-over engine truck (1); and
**in that** the cab-over engine truck (1) comprises crash boxes (12) arranged in front of the two parallel frame beams (3) of the chassis (C), the firewall (11) being positioned between the crash boxes (12) and the two parallel frame beams (3) of the chassis (C).

2. A cab-over engine truck (1) according to claim 1, wherein the front end of the lower front windscreen frame part (10) is positioned at a distance between 50 mm and 100 mm in front of the firewall (11).

3. A cab-over engine truck (1) according to claim 1 or 2, wherein the lower front windscreen frame part (10) is configured for deforming or collapsing a lower portion of the front windscreen (8) under a high load as a result of a frontal crash impact without the driver side A-pillar (5) and the co-driver side A-pillar (6) deforming.

4. A cab-over engine truck (1) according to any one of the preceding claims, wherein a front end of the crash boxes (12) is positioned at a distance between 90 mm and 150 mm in front of the firewall (11).

5. A cab-over engine truck (1) according to any one of the preceding claims, wherein the front grille (2) is mounted on the lower front windscreen frame part (10) by means of hinges (13), the hinges (13) being configured for collapsing in an event of a frontal crash impact.

6. A cab-over engine truck (1) according to any one of the preceding claims, wherein the driver side A-pillar (5) and the co-driver side A-pillar (6) are further connected by a dashboard supporting frame (14), the dashboard supporting frame (14) being configured to withstand tensional forces acting between the driver side A-pillar (5) and the co-driver side A-pillar (6) in an event of a frontal crash impact.

7. A cab-over engine truck (1) according to any one of the preceding claims, wherein the dashboard (7) is a modular dashboard (7) and comprises a front dashboard portion (7A) arranged in front of the driver side A-pillar (5) and the co-driver side A-pillar (6) as seen in the normal forward direction of movement of the cab-over engine truck (1), the front dashboard portion (7A) being deformable in an event of a frontal crash impact.

8. A cab-over engine truck (1) according to claims 6 and 7, wherein the front dashboard portion (7A) is connected to the dashboard supporting frame (14) by connecting means (15) which are configured to collapse or fail in an event of a frontal crash impact.

## Patentansprüche

1. Frontlenker-Lkw (1) mit einer Längsrichtung (L) in normaler Vorwärtsbewegungsrichtung des Frontlenker-Lkws (1), wobei der Frontlenker-Lkw (1) umfasst:
eine Vorderseite (F), die ein Frontgitter (2) umfasst;
ein Fahrgestell (C), das zwei parallele Rahmenträger (3) umfasst, die sich in Längsrichtung (L) erstrecken;
einen Motorraum (E);
und eine zumindest teilweise über dem Motorraum (E) positionierte Fahrerkabine (4);
die Fahrerkabine (4) umfassend:
ein Armaturenbrett (7);
eine A-Säule auf der Fahrerseite (5) und eine A-Säule auf der Beifahrerseite (6);
einen Frontscheibenrahmen (9), in dem eine Frontscheibe (8) montiert ist, wobei der Frontscheibenrahmen (9) ein unteres Frontscheibenrahmenteil (10) aufweist;
eine Brandschutzwand (11), die in vertikaler Richtung unter der Frontscheibe (8) positioniert ist, wobei sich die Brandschutzwand (11) zwischen einem unteren Teil (5A) der A-Säule auf der Fahrerseite (5) und einem unteren Teil der A-Säule auf der Beifahrerseite (6) erstreckt und mit diesem verbunden ist; wobei ein vorderes Ende des unteren Frontscheibenrahmenteils (10) in normaler Vorwärtsrichtung des Frontlenker-Lkws (1) gesehen vor der Brandschutzwand (11) positioniert ist;
**dadurch gekennzeichnet, dass** das Frontgitter (2) in normaler Vorwärtsrichtung des Frontlenker-Lkws (1) gesehen in einem Abstand zwischen 150 mm und 250 mm vor der Brandschutzwand (11) positioniert ist; und
dass der Frontlenker-Lkw (1) Crashboxen (12) umfasst, die vor den beiden parallelen Rahmenbalken (3) des Fahrgestells (C) angeordnet sind, wobei die Brandschutzwand (11) zwischen den Crashboxen (12) und den beiden parallelen Rahmenbalken (3) des Fahrgestells (C) positioniert ist.

2. Frontlenker-Lkw (1) nach Anspruch 1, wobei das vordere Ende des unteren Frontscheibenrahmenteils (10) in einem Abstand zwischen 50 mm und 100 mm vor der Brandschutzwand (11) positioniert ist.

3. Frontlenker-Lkw (1) nach Anspruch 1 oder 2, wobei das untere Frontscheibenrahmenteil (10) dazu eingerichtet ist, einen unteren Teil der Frontscheibe (8) unter hoher Last infolge eines Frontalaufpralls zu verformen oder einzuknicken, ohne Verformung der A-Säule auf der Fahrerseite (5) und der A-Säule auf der Beifahrerseite (6).

4. Frontlenker-Lkw (1) nach einem der vorhergehenden Ansprüche, wobei ein vorderes Ende der Crashboxen (12) in einer Entfernung zwischen 90 mm und 150 mm vor der Brandschutzwand (11) positioniert ist.

5. Frontlenker-Lkw (1) nach einem der vorhergehenden Ansprüche, wobei das Frontgitter (2) mittels Scharnieren (13) an dem unteren Frontscheibenrahmenteil (10) angebracht ist, wobei die Scharniere (13) so eingerichtet sind, dass sie bei einem Frontalaufprall einknicken.

6. Frontlenker-Lkw (1) nach einem der vorhergehenden Ansprüche, wobei die A-Säule auf der Fahrerseite (5) und die A-Säule auf der Beifahrerseite (6) ferner durch einen Armaturenbrett-Tragrahmen (14) verbunden sind, wobei der Armaturenbrett-Tragrahmen (14) so eingerichtet ist, dass er bei einem Frontalaufprall Zugkräften standhält, die zwischen der A-Säule auf der Fahrerseite (5) und der A-Säule auf der Beifahrerseite (6) wirken.

7. Frontlenker-Lkw (1) nach einem der vorhergehenden Ansprüche, wobei das Armaturenbrett (7) ein modulares Armaturenbrett (7) ist und einen vorderen Armaturenbrettabschnitt (7A) umfasst, der vor der A-Säule (5) auf der Fahrerseite und der A-Säule (6) auf der Beifahrerseite in normaler Vorwärtsbewegungsrichtung des Lkws mit Frontmotor (1) angeordnet ist, wobei der vordere Armaturenbrettabschnitt (7A) bei einem Frontalaufprall verformbar ist.

8. Frontlenker-Lkw (1) nach den Ansprüchen 6 und 7, wobei der vordere Armaturenbrettabschnitt (7A) mit dem Armaturenbrett-Tragrahmen (14) durch Verbindungsmittel (15) verbunden ist, die so eingerichtet sind, dass sie bei einem Frontalaufprall einknicken oder versagen.

## Revendications

1. Camion à cabine avancée (1) ayant une direction longitudinale (L), vu dans une direction normale de mouvement vers l'avant du camion à cabine avancée (1), le camion à cabine avancée (1) comprenant :
une face avant (F) comprenant une calandre (2) ;
un châssis (C) comprenant deux poutrelles parallèles (3) s'étendant dans la direction longitudinale (L) ;
un compartiment moteur (E) ;
et une cabine de conduite (4) au moins partiellement placée au-dessus du compartiment moteur (E) ;
la cabine de conduite (4) comprenant :
un tableau de bord (7) ;
un montant A côté conducteur (5) et un montant A côté aide-conducteur (6) ;
un cadre de pare-brise avant (9) dans lequel est monté un pare-brise avant (8), le cadre de pare-brise avant (9) ayant une partie inférieure de cadre de pare-brise avant (10) ;
une cloison pare-feu (11) positionnée verticalement sous le pare-brise avant (8), la cloison pare-feu (11) s'étendant entre et étant reliée à une partie inférieure (5A) du montant A côté conducteur (5) et à une partie inférieure du montant A côté conducteur (6) ; dans laquelle une extrémité avant de la partie inférieure du cadre du pare-brise avant (10) est positionnée devant la cloison pare-feu (11) vue dans la direction normale de déplacement vers l'avant du camion à cabine avancée (1) ;
**caractérisé en ce que** la calandre (2) est placée à une distance comprise entre 150 mm et 250 mm devant la cloison pare-feu (11), vue dans le sens normal du mouvement vers l'avant du camion à cabine avancée (1) ; et
par le fait que le camion à cabine avancée (1) comprend des boîtes-tampons (12) disposées devant les deux poutrelles parallèles (3) du châssis (C), la cloison pare-feu (11) étant placée entre les boîtes-tampons (12) et les deux poutrelles parallèles (3) du châssis (C).

2. Camion à cabine avancée (1) selon la revendication 1, dans lequel l'extrémité avant de la partie inférieure du cadre du pare-brise (10) est placée à une distance comprise entre 50 mm et 100 mm devant la cloison pare-feu (11).

3. Camion à cabine avancée (1) selon la revendication 1 ou 2, dans lequel la partie inférieure du cadre du pare-brise avant (10) est configurée pour déformer ou affaisser une partie inférieure du pare-brise avant (8) sous une charge élevée résultant d'un choc frontal sans que le montant A côté conducteur (5) et le montant A côté aide-conducteur (6) ne se déforment.

4. Camion à cabine avancée (1) selon l'une quelconque des revendications précédentes, dans lequel une extrémité avant des boîtes-tampons (12) est placée à une distance comprise entre 90 mm et 150 mm devant la cloison pare-feu (11).

5. Camion à cabine avancée (1) selon l'une quelconque des revendications précédentes, dans lequel la calandre (2) est montée sur la partie inférieure du cadre du pare-brise avant (10) au moyen de charnières (13), les charnières (13) étant configurées pour s'effondrer en cas d'impact frontal.

6. Camion à cabine avancée (1) selon l'une quelconque des revendications précédentes, dans lequel le montant A côté conducteur (5) et le montant A côté aide-conducteur (6) sont en outre reliés par un cadre de support du tableau de bord (14), le cadre de support du tableau de bord (14) étant configuré pour résister aux forces de tension agissant entre le montant A côté conducteur (5) et le montant A côté aide-conducteur (6) en cas d'impact frontal.

7. Camion à cabine avancée (1) selon l'une quelconque des revendications précédentes, dans lequel le tableau de bord (7) est un tableau de bord modulaire (7) et comprend une partie de tableau de bord avant (7A) disposée devant le pilier A côté conducteur (5) et le pilier A côté aide-conducteur (6) vus dans la direction normale de déplacement vers l'avant du camion à cabine avancée (1), la partie de tableau de bord avant (7A) étant déformable en cas d'impact frontal.

8. Camion à cabine avancée (1) selon les revendications 6 et 7, dans lequel la partie avant du tableau de bord (7A) est reliée au cadre de support du tableau de bord (14) par des moyens de liaison (15) qui sont configurés pour s'effondrer ou se rompre en cas d'impact frontal.
